# EUROPEAN PATENT SPECIFICATION

(11) **EP 4 620 193 B1**
(45) Date of publication and mention of the grant of the patent: **28.10.2026**
(21) Application number: 23789436.5
(22) Date of filing: 12.09.2023
(51) Int. Cl.: H04N 19/46

(54) **ESTIMATING METADATA FOR IMAGES HAVING ABSENT METADATA OR UNUSABLE FORM OF METADATA**
SCHÄTZUNG VON METADATEN FÜR BILDER OHNE METADATEN ODER EINE NICHT VERWENDBARE FORM VON METADATEN
ESTIMATION DE MÉTADONNÉES POUR DES IMAGES AYANT DES MÉTADONNÉES ABSENTES OU UNE FORME INUTILISABLE DE MÉTADONNÉES

(30) Priority: 16.11.2022 US 202263425814 P
(43) Date of publication of application: 24.09.2025
(73) Proprietor: Dolby Laboratories Licensing Corporation, San Francisco, CA 94103 (US)
(72) Inventor: ZANDIFAR, Ali, San Francisco, California 94103 (US); BAO, Zongnan, San Francisco, California 94103 (US)
(74) Representative: Dolby International AB Patent Group Europe
(86) International application number: PCT/US2023/074004
(87) International publication number: WO 2024/107472

(56) References cited:
- WO-A1-2018/005705
- WO-A1-2021/168001
- WO-A1-2022/039930
- ANONYMOUS: "Dolby Vision Metadata Levels", 14 May 2021 (2021-05-14), pages 1 - 10, XP093100785, Retrieved from the Internet <URL:https://professionalsupport.dolby.com/s/article/Dolby-Vision-Metadata-Levels> [retrieved on 20231113]

## Description

### 1. Cross-Reference to Related Applications

This application claims the benefit of priority from U.S. Provisional Application Ser. No. 63/425,814, filed on 16 November 2022.

### 2. Field of the Disclosure

Various example embodiments relate to image-processing operations and, more specifically but not exclusively, to determining parameters for mapping images and video signals from a first dynamic range to a different second dynamic range.

### 3. Background

This section introduces aspects that may help facilitate a better understanding of the disclosure. Related art documents include WO 2021/168001 A1 which is concerned with an optimisation of a neural network mapping an input first image with one DR to another input image with a smaller DR. The parameters describing the neural network are iteratively optimized and stored as metadata. WO 2022/039930 A1 discloses estimation of dynamic metadata for mapping an input image to a target display, the metadata are iteratively optimized based on appearance matching between the input and mapped images. WO 2018/005705 A1 discloses optimizing mapping parameters for mapping of an input image to a reference grade image,

Herein, the term "metadata" relates to any auxiliary information that is transmitted as part of the coded bitstream and assists a decoder in rendering the corresponding image(s). For television broadcasting and video streaming, video metadata may be used to provide side information about specific video and audio streams or files. Metadata can either be embedded directly into the video or be included as a separate file within a container, such as the MP4 or MKV. Metadata may include information about the entire video stream or file or about specific video frames. Created by cameras, encoders, and other video-processing elements, metadata may include but are not limited to timestamps, video resolution, digital film-grain parameters, color space or gamut information, reference display parameters, master display parameters, auxiliary signal parameters, file size, closed captioning, audio languages, ad-insertion points, color spaces, error messages, and so on.

In some cases, e.g., for legacy or older video and image content, the corresponding metadata are missing, do not exist, or are available only in an unusable or incompatible format.

### BRIEF SUMMARY OF SOME SPECIFIC EMBODIMENTS

Disclosed herein are various embodiments of methods and apparatus for estimating metadata for images having absent metadata**.** Various examples provide techniques for automatically generating usable metadata for such images based on iterative updates of a candidate image directed at minimizing a cost function constructed to quantify pertinent differences between the candidate and reference images. In some embodiments, the metadata are created using an optimization algorithm configured to use the per-pixel color-error representation format specified in the Recommendation ITU-R BT.2124. In various embodiments, the optimization algorithm can be selected from various optimization algorithms of the explore-exploit type or exploit type.

According to an example embodiment, provided is an image-processing apparatus for estimating metadata according to claim 9.

According to another example embodiment, provided is an image-processing method for estimating metadata according to claim 1.

According to yet another example embodiment, provided is a non-transitory machine-readable according to claim 8.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 is a block diagram illustrating a process flow for generating metadata according to various examples.
FIG. 2 is a block diagram illustrating a metadata estimator employed in the process flow of FIG. 1 according to various examples.
FIG. 3 is a flowchart illustrating a method of generating metadata that can be used in the process flow of FIG. 1 according to various examples.
FIG. 4 is a block diagram illustrating a computing device according to various examples.

### DETAILED DESCRIPTION

As used herein, the term "dynamic range" (DR) may relate to a capability of the human visual system (HVS) to perceive a range of intensity (e.g., luminance, luma) in an image, e.g., from darkest blacks (darks) to brightest whites (highlights). In this sense, DR relates to a "scene-referred" intensity. DR may also relate to the ability of a display device to render, adequately or approximately, an intensity range of a particular breadth. In this sense, DR relates to a "display-referred" intensity. Unless a particular sense is explicitly specified to have particular significance at any point in the description herein, it should be inferred that the term may be used in either sense, e.g., interchangeably.

As used herein, the term "high dynamic range" (HDR) relates to a DR breadth that spans 14-15 or more orders of magnitude of the HVS. In practice, the DR over which a human may simultaneously perceive an extensive breadth in intensity range may be somewhat truncated, in relation to HDR. As used herein, the terms "enhanced dynamic range" (EDR) or "visual dynamic range" (VDR) may individually or interchangeably relate to the DR that is perceivable within a scene or image by a human visual system that includes eye movements, allowing for some light adaptation changes across the scene or image. Herein, EDR may relate to a DR that spans 5 to 6 orders of magnitude. While perhaps somewhat narrower in relation to the true scene-referred HDR, EDR nonetheless represents a wide DR breadth and sometimes may also be referred to as HDR.

In practice, images comprise one or more color components (e.g., luma Y and chroma Cb and Cr) of a color space, where each color component is represented with a precision of n-bits per pixel (e.g., n=8). Using non-linear luminance coding (e.g., gamma encoding), images where n ≤ 8 (e.g., 24-bit color JPEG images) are considered images of standard dynamic range (SDR), while images where n > 8 may be considered images of EDR.

A reference electro-optical transfer function (EOTF) for a given display characterizes the relationship between color values (e.g., luminance) of an input video signal to output screen color values (e.g., screen luminance) produced by the display. For example, ITU Rec. ITU-R BT. 1886, "Reference electro-optical transfer function for flat panel displays used in HDTV studio production," (March 2011)**,** defines the reference EOTF for flat panel displays. Given a video stream, information about its EOTF may be embedded in the bitstream as (image) metadata.

As used herein, the term "PQ" refers to perceptual luminance amplitude quantization. The HVS responds to increasing light levels in a very nonlinear way. A human's ability to see a stimulus is affected by the luminance of that stimulus, the size of the stimulus, the spatial frequencies making up the stimulus, and the luminance level that the eyes have adapted to at the particular moment one is viewing the stimulus. In some cases, a PQ function may map linear input gray levels to output gray levels that better match the contrast sensitivity thresholds in the human visual system. An example PQ mapping function is described in SMPTE ST 2084:2014 "High Dynamic Range EOTF of Mastering Reference Displays" (hereinafter "SMPTE").

Many consumer displays may support luminance of 100 to 300 cd/m² or nits. Many consumer HDTVs range from 300 to 500 nits, with new models reaching approximately 1000 nits. Such conventional displays typify lower dynamic range (LDR) displays, some of which are referred to as SDR displays. Legacy SDR video is a video technology that represents light intensity based on the brightness, contrast, and color characteristics and limitations of a cathode ray tube (CRT) display. Legacy SDR video typically represents image colors with a maximum luminance of around 100 nits, a black level of around 0.1 nits, and the ITU 709 / sRGB color gamut.

The following description provides nonlimiting examples of metadata that can be used in various embodiments disclosed herein. In some examples, the metadata can be sorted into several distinct sets, often referred as metadata levels. Various embodiments may rely on all or only some of the metadata levels. In other words, in some examples, additional metadata may be generated and added to the image stream after the image processing disclosed herein is completed**.** Additional examples of metadata that can be used in at least some embodiments are described in U.S. Patent Nos. 9,961,237, 10,540,920, and 10,600,166.

Level 1 or L1 is a first set of metadata that may be created by performing a pixel-level, analysis of an image. L1 metadata include the following values: (i) the lowest black level in the image, denoted Minimum (or min); (ii) the average luminance level across the image, denoted Average (or avg, or mid); and (iii) the highest luminance level in the image, denoted Maximum (or max). L1 metadata are usually created per image and may be assumed to be unique for every image (e.g., video frame) on the timeline or in a piece of content, such as a movie, an episode of a television series, or a documentary. However, in some examples, a plurality of images may have the same metadata, e.g., when a colorist copies the L1 metadata from one image to one or more other images on the timeline. The copying is sometimes done to match and apply the same mapping to similar shots of a scene. Additional scenarios exist, in which a plurality of images has the same metadata. Such scenarios are known to persons of ordinary skill in the pertinent art.

In some examples, an L1-min value denotes the minimum of the PQ-encoded min(RGB) values of the respective portion of the video content (e.g. a video frame or image), while taking into consideration only an active area (e.g., by excluding gray or black bars, letterbox bars, and the like), where min(RGB) denotes the minimum of color component values {R, G, B} of a pixel. The L1-mid and L1-max values are also computed in a similar fashion. In a specific example, L1-mid may denote the average of the PQ-encoded max(RGB) values of the image, and L1-max may denote the maximum of the PQ-encoded max(RGB) values of the image, where max(RGB) denotes the maximum of color component values {R, G, B} of a pixel. In some embodiments, L1 metadata may be normalized to be in the range [0, 1].

In some examples, when there is a need to create a dynamic or animated trim within a shot due to a transition in the grade or the light/color composition of the shot, the metadata are generated per frame to create a smooth transition from one state of the image to the other. In such examples, the per-frame metadata on each frame of the animation or dynamic may include L1 metadata as well as Level 2 (L2), Level 3 (L3), and/or Level 8 (L8) metadata, often referred to as trims, depending on the trim parameters that are being changed across the range of frames. A trim pass offers the colorist an option to check the mapping resulting from the L1 metadata and make changes or adjustments to obtain a different result that matches the creative intent. In some examples, changes to the metadata can be made using a set of trim controls provided on the color correction or mastering system. In various examples, the trim controls produce corrected metadata and/or new metadata that modify the mapping, and the colorist can use any combination of available controls to produce a desired result. While the trim controls are typically designed to mimic the look and feel of color correction tools/controls that colorists are familiar with, it is important to note that trim controls are substantially metadata-modifier controls that do not typically perform any color correction or alter the HDR Master grade. Adjustments to the trim controls typically produce new metadata, resulting in a change in the mapping that is observed on the output (e.g., target) display. The new metadata can be exported, e.g., as an XML file.

In some examples, some or all of the following controls are used to generate various trim levels of metadata. Lift, Gamma, and Gain are trim controls used to modify the shadows, mid-tones, and highlights of the image. In operation, these three controls are substantially adjusting the tone-mapping curve while mimicking the response of conventional (not metadata based) lift, gamma, and gain controls. In other words, the Lift, Gamma, and Gain trim controls only mimic the effect of, but have a different function compared to that of the conventional lift, gamma, and gain controls. Tone Detail is a trim control that restores sharpness in the highlight areas of the mapped image. Tone Detail works well in SDR by restoring some of the sharpness and details in the highlights that may be lost when mapping down from HDR to SDR. Chroma Weight is a trim control that helps preserve color saturation in the upper mid-tones and highlight areas, especially when mapping down from HDR to SDR. This trim control is typically used to reduce luminance in highly saturated colors, thereby adding detail in those areas. Chroma Weight ranges from minimum luminance with maximum saturation on one end to maximum luminance with minimum saturation on the other end of the control range. Saturation Gain is a trim control that enables colorists to adjust the overall saturation of the mapped image. Saturation Gain typically affects all colors in the image.

In some examples, some or all of the following additional trim controls are used. Mid-Tone Offset is a useful trim control for matching the overall exposure of the mapped SDR signal to the HDR master or to an SDR reference. Mid-Tone Offset acts as an offset to the L1 mid values and adjusts the image's mid-tones without affecting the blacks and highlights. The changes made using Mid-Tone Offset are recorded as part of L3 metadata for each shot or frame of the project. Mid Contrast Bias is a trim control that compresses or stretches the image around the mid-tone region and can increase or decrease contrast in the mid-tones of the mapped image. Mid Contrast Bias is typically used along with Lift and/or Gain to produce desired overall results. Highlight Clipping is a trim control that allows the colorist to set the level of detail in the highlights by either retaining or clipping them as required. Clipping the highlights may be used, e.g., when the mapped image displays details that are undesirable. The resulting clipping may extend into the upper mid tones and may trigger some compensation using Gamma or Gain adjustments. Highlight Clipping can be useful, e.g., when trying to match the mapped SDR to an existing SDR reference (e.g., as described in reference to some examples below).

In some examples, further trim controls, referred to as secondary trim controls, are recorded using L8 metadata for each shot or frame of the project. For example, Color Saturation trim controls allow colorists to adjust the saturation of the mapped image individually across red, yellow, green, cyan, blue, and magenta, or all colors collectively when linked together. Color Hue trim controls allow colorists to offset the hue of the mapped image individually across red, yellow, green, cyan, blue, and magenta. These controls are useful when trying to fit/shift a larger color gamut into a smaller color gamut. Adjustments made to the mapping using the secondary trim controls are typically recorded as L8 metadata in the XML file.

In various examples, the 100-nit (SDR) target is the lowest target of the mapping(s). Some studios only request the HDR master as the primary deliverable for their content and do not request a separate SDR version. In such cases, the SDR version can be derived from the HDR master. It therefore becomes the facility's responsibility to ensure that the derived SDR matches the creative intent. A check and trim pass at a 100-nit target can be used to ensure that the derived SDR meets the creative intent and expectations. Some studios may also request an additional trim, e.g., at a 600-nit PQ target. When performing target trim passes for multiple targets, it is typically recommended to start with the lowest DR target before proceeding to a higher DR target.

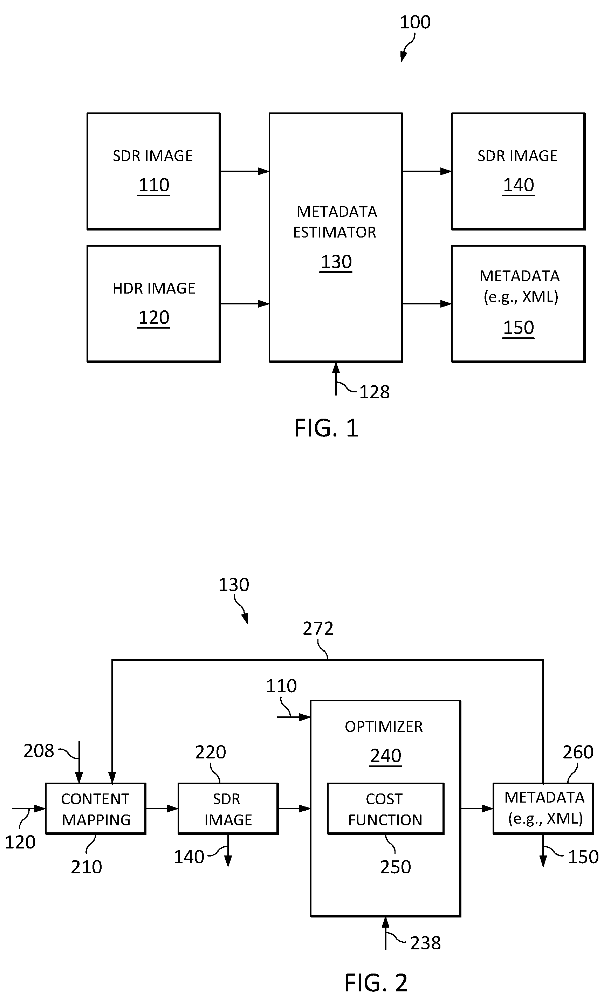

FIG. 1 is a block diagram illustrating a process flow (100) for generating metadata according to various examples. For illustration purposes, the process flow (100) is described below in reference to an HDR and SDR example. However, various embodiments are not so limited. In various additional examples, two pertinent DRs corresponding to the process flow (100) are generally a first DR and a different second DR smaller than the first DR. In the context of FIG. 1, HDR and SDR are examples of the first DR and the second DR, respectively.

Inputs to the process flow (100) include an SDR image (110) and an HDR image (120). In a representative example, the SDR image (110) is generated by curating the HDR image (120) via a separate workflow (not shown in FIG. 1). In various examples, such separate workflow either does not generate metadata or generates metadata in unusable form.

The process flow (100) employs a metadata estimator (130) to generate an SDR image (140) and metadata (150) based on the input images (110, 120). The SDR image (140) is an approximation of the SDR image (110) created by curating the HDR image (120) using image-processing tools compatible with the image-curating tools available to the colorists tasked with processing the images (110, 120). In a representative example, the metadata (150) include L1 metadata and at least some of the above-described L2, L3, and L8 metadata corresponding to the SDR image (140). The metadata estimator (130) is configured to execute an iterative process directed at generating the SDR image (140) such that pertinent differences between the SDR image (140) and the SDR image (110) are small based on one or more image-comparison metrics employed by the metadata estimator (130). As a result, the metadata (150) can be used as metadata corresponding to the SDR image (110) as well.

In various examples, configuration of the metadata estimator (130) is set based on a plurality of configuration and/or control inputs (128). The inputs (128) include one or more of: (i) identification of the levels of metadata to be used in the metadata (150); (ii) identification of an optimizer type for running the above-mentioned iterative process; (iii) optimization initialization parameters; (iv) identification of one or more metrics (or objective functions) for comparing pertinent SDR images; and (v) identification of the file format in which the metadata (150) are to be generated. In various examples, the metadata estimator (130) can be configured (based on the configuration/control inputs (128)) to process a still image or a sequence of video frames. In the case of video, the corresponding objective function specified through the inputs (128) may be selected, e.g., to provide temporal smoothness of the trims over the frame sequence in addition to meeting the pertinent in-frame trim objectives. Various embodiments, examples, and features of the metadata estimator (130) are described in more detail below.

FIG. 2 is a block diagram illustrating the metadata estimator (130) according to various examples. The metadata estimator (130) comprises an optimizer circuit or module (240). In operation, the optimizer circuit (240) generates metadata (260) based on the SDR image (110), an SDR image (220), and a cost function (250). A control signal (238) applied to the optimizer circuit (240) identifies the levels of metadata to be used for the metadata (260). In some examples, the control signal (238) is one of the configuration/control inputs (128). The metadata estimator (130) performs iterative computations of the SDR image (220) and the metadata (260). The metadata (260) computed in the previous iteration are applied, via a feedback path (272), to a content mapping circuit or module (210) for the next iteration. When the iterations are stopped based on the applicable stoppage criteria, the SDR image (220) and the metadata (260) are outputted from the metadata estimator (130) as the SDR image (140) and the metadata (150), respectively.

The content mapping circuit (210) operates to map the HDR image (120) to the SDR image (220) based on applicable metadata. For the first iteration of the metadata estimator (130) directed at generating the metadata (150), the applicable metadata are provided via a control signal (208). In some examples, the control signal (208) is one of the configuration/control inputs (128), e.g., the input signal configured to provide the above-mentioned optimization initialization parameters. For any one of the next iterations of the metadata estimator (130) directed at generating the metadata (150), the applicable metadata are the metadata (260) provided via the feedback path (272).

In each iteration, the metadata estimator (130) performs computations directed at generating the metadata (260) based on a comparison of the SDR images (110, 220) quantified using the cost function (250). Several nonlimiting examples of the cost function (250) are described in more detail below. The optimizer circuit (240) determines whether to stop or continue iterations by (i) computing the value of the cost function (250) for the current pair of the SDR images (110, 220) and (ii) comparing the computed value of the cost function (250) with a fixed threshold value. The fixed threshold value is typically a configuration parameter of the corresponding optimization algorithm. When the computed cost-function value is larger than the fixed threshold value, the optimizer circuit (240) advances the processing in the metadata estimator (130) to the next iteration. When the computed cost-function value is equal to or smaller than the fixed threshold value, the optimizer circuit (240) stops the iterations.

In mathematical terms, the optimization problem numerically solved by the metadata estimator (130) can be stated using Eq. (1): ${min}_{p ∈ {\left[-1,1\right]}^{d}} Metric \left(CM\left(HDR\left(r, g, b\right),p\right),{SDR}_{ref}\left(r, g, b\right)\right)$ (1) where ***p*** denotes the metadata; CM denotes the content-mapping function of the content mapping circuit (210); *HDR*(*r, g, b*) denotes the HDR image (120) in the RGB color space; and *SDR_{ref}*(*r, g, b*) denotes the SDR image (110) in the RGB color space. In an example implementation of the metadata estimator (130), the above optimization problem is solved by iteratively finding an approximate minimum of the function *Metric* over the *d*-dimensional space of pertinent metadata parameters.

In some examples, the cost function (250) is implemented based on the function ΔE ITP, which is a per-pixel color-error representation format specified in the Recommendation ITU-R BT.2124**.** The function ΔE ITP measures the distance between two pixels in the ICtCp color space. ICtCp is a color representation format specified in the Recommendation ITU-R BT.2100**.** Eq. (2) provides an example mathematical expression for the function ΔE ITPa $Δ {E}_{ITP} = 720 ∗ \sqrt{{\left({I}_{1}-{I}_{2}\right)}^{2} + {\left({T}_{1}-{T}_{2}\right)}^{2} + {\left({P}_{1}-{P}_{2}\right)}^{2}}$ (2) where the parameters *I, T, P* are expressed through the coordinates of the ICtCp color space as follows: $I = I$ (3) $T = 0.5 ∗ {C}_{T}$ (4) $P = {C}_{P}$ (5) The subscripts "1" and "2" of the parameters *I, T, P* refer to the first and second pixels, respectively, of the compared pair of pixels. When the function ΔE ITP is applied to the SDR images (110, 220) in the optimizer circuit (240), the subscript "1" indicates a pixel of the SDR image (110), and the subscript "2" indicates the corresponding pixel of the SDR image (220). In this specific context, the term "corresponding" means that the first and second pixels have the same location within the pixel frame, which is typically the same for the images (110, 120, 140, 220).

As evident from the above description, the function ΔE ITP is only a local, pixel-specific metric within the pixel frame. In contrast, the cost function (250) provides a metric in the sense of Eq. (1) for the entire pixel frame. In various examples, the cost function (250) is computed using the values of the function ΔE ITP for a plurality of pixels. In one specific example, the cost function (250) is the average of the values of the function ΔE ITP taken over the pixel frame. In another specific example, the cost function (250) is the maximum of the values of the function ΔE ITP in the pixel frame. In yet another specific example, the cost function (250) is a weighted sum of the average and maximum values. Additional implementations of the cost function (250) based on the function ΔE ITP or other suitable metric quantifying differences between the SDR images (110, 220) are also possible, as made apparent to persons of ordinary skill in the art by the above description.

In various examples, the optimizer circuit (240) can be programmed to employ any suitable cost-function optimization algorithm directed at finding optimal values for the metadata parameters ***p*** by locating the global minimum of the cost function (250). A variety of such algorithms (including but not limited to the algorithms that are based on the evaluation of Hessians, gradients, or only function values) are known to persons of ordinary skill in the pertinent art. In one specific nonlimiting example, the optimizer circuit (240) is programmed to employ particle swarm optimization (PSO).

PSO is a computational method that optimizes the problem formulated by Eq. (1) by iteratively trying to improve a candidate solution based on the cost function (250). PSO solves the problem by having a population of candidate solutions, dubbed particles, and by moving those particles in the search-space according to the particle's position and velocity. Each particle's movement is influenced by its local best position and is also guided toward the best known positions in the search space, which are updated as better positions are found by other particles. This process gradually moves the swarm toward the optimal solution in the search space. PSO is a metaheuristic as it makes few or no assumptions about the problem being optimized and can search very large spaces of candidate solutions. Also, PSO does not rely on gradients, which means that PSO does not require that the optimization problem be differentiable, unlike some other optimization methods, such as gradient-descent and quasi-newton methods. Beneficially, PSO lends itself to efficient parallel-computing implementations.

PSO is an example of the explore-exploit type of optimization algorithms. In various additional implementations of the optimizer circuit (240), other explore-exploit type optimization algorithms may similarly be used. In general, various optimization algorithms suitable for programming the optimizer circuit (240) may have different proportions between exploration and exploitation. Briefly defined, exploration is the ability of the algorithm to search those regions of the search space which have not been searched or visited. However, those unsearched regions may or may not lead to better solutions. As such, exploration by itself does not necessarily lead to an optimal solution. In contrast, exploitation is the ability of the optimization algorithm to improve the best solution it has found so far by searching a relatively small area around that solution.

In some additional examples, exploit-type optimization algorithms may also be used for programming the optimizer circuit (240). One example exploit-type optimization algorithm suitable for programming the optimizer circuit (240) is the Powell's method. Powell's method relies on a maximum-gradient technique which, starting from an initial guess, moves in the search space towards a minimum by finding a good direction in which to move, and calculating a practical distance to go for each iteration. The corresponding algorithm iterates until no significant improvements are being achieved by further iterations. The Powell's method can be useful, e.g., for finding the local minimum of a continuous but complex cost function, including functions that are not differentiable.

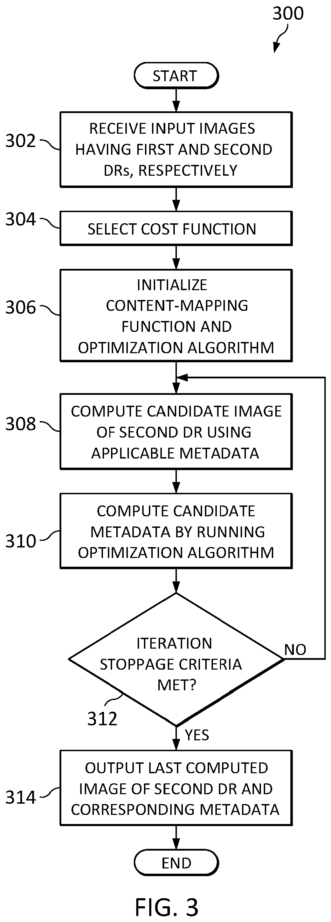

FIG. 3 is a flowchart illustrating a method (300) of generating the metadata (150) according to various examples. For illustration purposes and without any implied limitations, the method (300) is described below in reference to the PSO and Powell algorithms. In some examples, the method (300) is implemented using the metadata estimator (130) as described below. Based on the provided description, a person of ordinary skill in the pertinent art will be able to make and use additional implementations of the method (300) without any undue experimentation, including implementations that are based on other explore-exploit and exploit types of optimization algorithms.

The method (300) comprises receiving the SDR image (110) and the HDR image (120) in block (302). The method (300) further comprises selecting a cost function (250) in block (304). The cost function (250) can be selected from a plurality of available choices, e.g., based on the specific objectives (e.g., creative intent) that triggered the processing of the images (110, 120) in the metadata estimator (130). The choice of the cost function (250) also may depend on the specific optimization algorithm executed as part of the method (300). For example, the above-described PSO and Powell algorithms may use different respective cost functions (250).

The method (300) also comprises initializing the content-mapping function and the optimization algorithm in block (306). The content-mapping function is implemented using the content mapping circuit (210) as explained above and is initialized using the control signal (208). The optimization algorithm is run by the optimizer circuit (240) as explained above and is initialized using the control signal (238).

The method (300) also comprises computing the SDR image (220) by applying the content-mapping function, with applicable metadata, to the HDR image (120) in block (308). For the initial (first) iteration, the applicable metadata are provided via the control signal (208). For any subsequent iteration, the applicable metadata are the metadata (260) provided via the feedback path (272).

The method (300) also comprises updating the metadata (260) by running the optimization algorithm with the optimizer circuit (240) in block (310). In the initial iteration, the metadata (260) are generated *de novo.* In any of the subsequent iterations, the metadata (260) are updated by the optimization algorithm based on the SDR image (220) computed in the block (308) and computations of the cost function (250) in conjunction with the optimization algorithm. For example, for the PSO algorithm, the SDR image (220) is computed in the block (308) using the current one of a plurality of candidate metadata sets having a minimum value of the cost function (250).

For the PSO algorithm, operations performed in the block (310) include computing the cost function (250) for each of the plurality of candidate metadata sets. In some examples, there can be approximately 50 different candidate metadata sets used in each iteration. Operations performed in the block (310) also include changing and/or updating each of the plurality of the candidate metadata sets based on the directions, in the search space, towards a respective weighted average of the personal best and group best. The group best is the position, in the search space, of the current one of the plurality (e.g., 50) of candidate metadata sets having a minimum value of the cost function (250). The personal best is determined on the history of the updates and is the position, in the search space, of the respective candidate metadata set in which that candidate metadata set has a personal minimum value of the cost function (250). The coefficients used for computing the weighted average are parameters of the PSO algorithm. In different implementations, the computations of the candidate metadata sets in each iteration can be parallel or sequential.

For the Powell algorithm, there is one candidate metadata set in each iteration. Operations performed in the block (310) include computing the cost function (250) for the current candidate metadata set. Operations performed in the block (310) also include changing and/or updating the candidate metadata set based on the gradient direction of the cost function (250) (in the search space) or some approximation thereof.

The method (300) also comprises determining whether the iteration stoppage criteria are satisfied in decision block (312). For the PSO algorithm, the stoppage criteria include determining whether the plurality of the candidate metadata sets are all located, in the search space, within a fixed distance of each other, e.g., within a multidimensional sphere of a fixed radius. The fixed distance (or radius) is a configuration parameter of the PSO algorithm. For the Powell algorithm, the stoppage criteria include comparing the cost-function value with a fixed threshold value. The fixed threshold value is a configuration parameter of the Powell algorithm. When the iteration stoppage criteria are not met ("No" at the decision block (312)), the processing of the method (300) in the metadata estimator (130) is looped back to the block (308). When the iteration stoppage criteria are met ("Yes" at the decision block (312)), the processing of the method (300) in the metadata estimator (130) is directed to block (314).

The method (300) further comprises outputting the last-computed SDR image (220) and the last best metadata (260) as the SDR image (140) and the metadata (150), respectively, in the block (314). Upon completing the outputting in the block (314), the processing of the method (300) in the metadata estimator (130) is terminated.

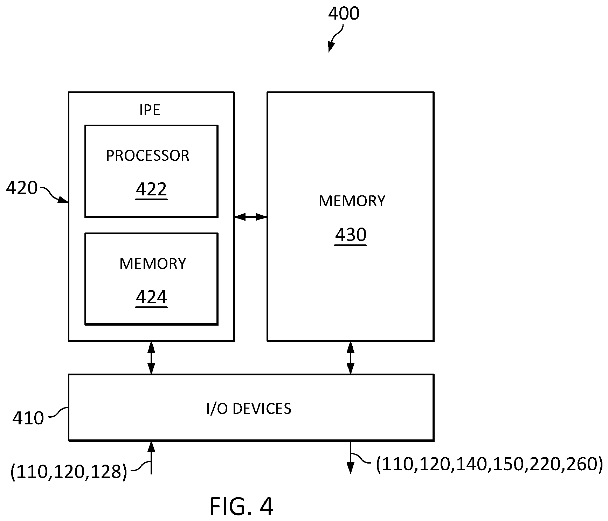

FIG. 4 is a block diagram illustrating a computing device (400) according to various examples. The device (400) can be used, e.g., to implement the process flow (100). The device (400) comprises input/output (I/O) devices (410), an image-processing engine (IPE, 420), and a memory (430). The I/O devices (410) may be used to enable the device (400) to receive the input images (110, 120) and the configuration/control inputs (128) and to output the image (140) and the metadata (150). The I/O devices (410) may also be used to connect the device (400) to a display.

The memory (430) may have buffers to receive image data and other pertinent input data. The data may be, e.g., in the form of image files, data packets, and XML files. Once the data are received, the memory (430) may provide parts of the data to the IPE (420), e.g., for executing the method (300). The IPE (420) includes a processor (422) and a memory (424). The memory (424) may store therein program code, which when executed by the processor (422) enables the IPE (820) to perform image processing, including but not limited to the image processing in accordance with some the process flow (100) and the method (300). Once the IPE (420) generates the image (140) and the metadata (150) by executing the corresponding portions of the code, the IPE (420) operates to output the same. The IPE (420) may perform rendering processing of the various images (110, 120, 140, 220) and provide the corresponding viewable image(s) for being viewed on the display. The viewable image can be, e.g., in the form of a suitable image file outputted through the I/O devices (410).

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in fewer than all features of a single disclosed embodiment. Thus, the following claims are hereby incorporated into the Detailed Description, with each claim standing on its own as a separately claimed subject matter.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Some embodiments may be implemented as circuit-based processes, including possible implementation on a single integrated circuit.

Some embodiments can be embodied in the form of methods and apparatuses for practicing those methods. Some embodiments can also be embodied in the form of program code recorded in tangible media, such as magnetic recording media, optical recording media, solid state memory, floppy diskettes, CD-ROMs, hard drives, or any other non-transitory machine-readable storage medium, wherein, when the program code is loaded into and executed by a machine, such as a computer, the machine becomes an apparatus for practicing the patented invention(s). Some embodiments can also be embodied in the form of program code, for example, stored in a non-transitory machine-readable storage medium including being loaded into and/or executed by a machine, wherein, when the program code is loaded into and executed by a machine, such as a computer or a processor, the machine becomes an apparatus for practicing the patented invention(s). When implemented on a general-purpose processor, the program code segments combine with the processor to provide a unique device that operates analogously to specific logic circuits.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the terms "circuit," "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An image-processing method for estimating metadata, the method comprising:
accessing, with an electronic processor, a first image of a scene and a second image of the scene, the first image having a first dynamic range (DR), the second image having a second DR smaller than the first DR, wherein there is no metadata associated with the second image;
generating, with the electronic processor, a third image of the scene having the second DR by applying a mapping function to the first image, the mapping function being configured using an applicable metadata set;
generating, with the electronic processor, a sequence of updated metadata sets by iteratively updating the applicable metadata set based on a cost function quantifying a difference between the second image and the third image; and
computing, with the electronic processor, a value of the cost function to select an output metadata set from said sequence, the output metadata set having estimated metadata for the second image.

2. The method of claim 1,
wherein the first DR is a high DR; and
wherein the second DR is a standard DR.

3. The method of claim 1 or claim 2, wherein the output metadata set includes level 1 metadata and another-level metadata.

4. The method of any one of claims 1 to 3,
wherein, for an initial iteration, the applicable metadata set is an initialization metadata set; and
wherein, for any subsequent iteration, the applicable metadata set is an updated metadata set generated in an immediately preceding iteration.

5. The method of any one of claims 1 to 4, wherein said iteratively updating comprises running, with the electronic processor, an optimization algorithm directed at finding a minimum of the cost function, and optionally wherein the optimization algorithm comprises a particle swarm optimization algorithm or a Powell-type optimization algorithm.

6. The method of any one of claims 1 to 5, further comprising computing, with the electronic processor, the cost function using a ΔE ITP function applied to a pair of pixels, one pixel of the pair being from the second image, and other pixel of the pair being from the third image.

7. The method of claim 6, wherein the value of the cost function is determined by finding a maximum value of the ΔE ITP function over a pixel frame corresponding to the second and third images or by computing an average value of the ΔE ITP function over a pixel frame corresponding to the second and third images.

8. A non-transitory machine-readable medium, having encoded thereon program code, wherein, when the program code is executed by a machine, the machine performs operations comprising the method of claim 1.

9. An image-processing apparatus for estimating metadata, the apparatus comprising:
at least one processor; and
at least one memory including program code;
wherein the at least one memory and the program code are configured to, with the at least one processor, cause the apparatus at least to:
access a first image of a scene and a second image of the scene, the first image having a first dynamic range (DR), the second image having a second DR smaller than the first DR, wherein there is no metadata associated with the second image;
generate a third image of the scene having the second DR by applying a mapping function to the first image, the mapping function being configured using an applicable metadata set;
generate, a sequence of updated metadata sets by iteratively updating the applicable metadata set based on a cost function quantifying a difference between the second image and the third image; and
compute a value of the cost function to select an output metadata set from said sequence, the output metadata set having estimated metadata for the second image.

10. The apparatus of claim 9,
wherein the first DR is a high DR; and
wherein the second DR is a standard DR.

11. The apparatus of claim 9 or claim 10, wherein the output metadata set includes level 1 metadata and another-level metadata.

12. The apparatus of any one of claims 9 to 11,
wherein, for an initial iteration, the applicable metadata set is an initialization metadata set; and
wherein, for any subsequent iteration, the applicable metadata set is an updated metadata set generated in an immediately preceding iteration.

13. The apparatus of any one of claims 9 to 12, wherein said iteratively updating comprises running, with the processor, an optimization algorithm directed at finding a minimum of the cost function, and optionally wherein the optimization algorithm comprises a particle swarm optimization algorithm or a Powell-type optimization algorithm.

14. The apparatus of any one of claims 9 to 13, wherein the at least one memory and the program code are further configured to, with the at least one processor, cause the apparatus to compute the cost function using a ΔE ITP function applied to a pair of pixels, one pixel of the pair being from the second image, and other pixel of the pair being from the third image.

15. The apparatus of claim 14, wherein the value of the cost function is determined by finding a maximum value of the ΔE ITP function over a pixel frame corresponding to the second and third images or wherein the value of the cost function is determined by computing an average value of the ΔE ITP function over a pixel frame corresponding to the second and third images.

## Patentansprüche

1. Bildverarbeitungsverfahren zum Schätzen von Metadaten, wobei das Verfahren umfasst:
Zugreifen auf ein erstes Bild einer Szene und ein zweites Bild der Szene mit einem elektronischen Prozessor, wobei das erste Bild einen ersten Dynamikbereich (DR) aufweist, wobei das zweite Bild einen zweiten DR aufweist, der kleiner als der erste DR ist, wobei dem zweiten Bild keine Metadaten zugeordnet sind;
Erzeugen eines dritten Bildes der Szene, das den zweiten Dynamikbereich aufweist, mit dem elektronischen Prozessor durch Anwenden einer Abbildungsfunktion auf das erste Bild, wobei die Abbildungsfunktion unter Verwendung eines anwendbaren Metadatensatzes konfiguriert wird;
Erzeugen einer Folge von aktualisierten Metadatensätzen mit dem elektronischen Prozessor durch iteratives Aktualisieren des anwendbaren Metadatensatzes auf der Grundlage einer Kostenfunktion, die eine Differenz zwischen dem zweiten Bild und dem dritten Bild quantifiziert; und
Berechnen eines Wertes der Kostenfunktion mit dem elektronischen Prozessor, um einen Ausgabe-Metadatensatz aus der Folge auszuwählen, wobei der Ausgabe-Metadatensatz geschätzte Metadaten für das zweite Bild aufweist.

2. Verfahren nach Anspruch 1,
wobei der erste DR ein hoher DR ist; und
wobei der zweite DR ein Standard-DR ist.

3. Verfahren nach Anspruch 1 oder Anspruch 2, wobei der Ausgabe-Metadatensatz Metadaten der Ebene 1 und Metadaten einer anderen Ebene einschließt.

4. Verfahren nach einem der Ansprüche 1 bis 3,
wobei für eine anfängliche Iteration der anwendbare Metadatensatz ein Initialisierungs-Metadatensatz ist; und
wobei für jede nachfolgende Iteration der anwendbare Metadatensatz ein aktualisierter Metadatensatz ist, der in einer unmittelbar vorhergehenden Iteration erzeugt wurde.

5. Verfahren nach einem der Ansprüche 1 bis 4, wobei das iterative Aktualisieren das Ausführen eines Optimierungsalgorithmus, der auf das Finden eines Minimums der Kostenfunktion ausgerichtet ist, mit dem elektronischen Prozessor umfasst und wobei optional der Optimierungsalgorithmus einen Partikelschwarm-Optimierungsalgorithmus oder einen Optimierungsalgorithmus vom Powell-Typ umfasst.

6. Verfahren nach einem der Ansprüche 1 bis 5, ferner umfassend: Berechnen der Kostenfunktion mit dem elektronischen Prozessor unter Verwendung einer ΔE-ITP-Funktion, die auf ein Pixelpaar angewendet wird, wobei ein Pixel des Paars aus dem zweiten Bild stammt und das andere Pixel des Paars aus dem dritten Bild stammt.

7. Verfahren nach Anspruch 6, wobei der Wert der Kostenfunktion durch Finden eines Maximums der ΔE-ITP-Funktion über einem Pixelrahmen, der dem zweiten und dem dritten Bild entspricht, oder durch Berechnen eines Durchschnittswerts der ΔE-ITP-Funktion über einem Pixelrahmen, der dem zweiten und dem dritten Bild entspricht, bestimmt wird.

8. Nichtflüchtiges maschinenlesbares Medium, das darauf codierten Programmcode aufweist, wobei, wenn der Programmcode durch eine Maschine ausgeführt wird, die Maschine Operationen durchführt, die das Verfahren nach Anspruch 1 umfassen.

9. Bildverarbeitungseinrichtung zum Schätzen von Metadaten, wobei die Einrichtung umfasst:
mindestens einen Prozessor; und
mindestens einen Speicher, der Programmcode einschließt;
wobei der mindestens eine Speicher und der Programmcode dafür konfiguriert sind, mit dem mindestens einen Prozessor die Einrichtung mindestens dazu veranlassen:
auf ein erstes Bild einer Szene und ein zweites Bild der Szene zuzugreifen, wobei das erste Bild einen ersten Dynamikbereich (DR) aufweist, wobei das zweite Bild einen zweiten DR aufweist, der kleiner als der erste DR ist, wobei dem zweiten Bild keine Metadaten zugeordnet sind;
ein drittes Bild der Szene, das den zweiten Dynamikbereich aufweist, durch Anwenden einer Abbildungsfunktion auf das erste Bild zu erzeugen, wobei die Abbildungsfunktion unter Verwendung eines anwendbaren Metadatensatzes konfiguriert wird;
eine Folge von aktualisierten Metadatensätzen durch iteratives Aktualisieren des anwendbaren Metadatensatzes auf der Grundlage einer Kostenfunktion, die eine Differenz zwischen dem zweiten Bild und dem dritten Bild quantifiziert, zu erzeugen; und
einen Wert der Kostenfunktion zu berechnen, um einen Ausgabe-Metadatensatz aus der Folge auszuwählen, wobei der Ausgabe-Metadatensatz geschätzte Metadaten für das zweite Bild aufweist.

10. Einrichtung nach Anspruch 9,
wobei der erste DR ein hoher DR ist; und
wobei der zweite DR ein Standard-DR ist.

11. Einrichtung nach Anspruch 9 oder Anspruch 10, wobei der Ausgabe-Metadatensatz Metadaten der Ebene 1 und Metadaten einer anderen Ebene einschließt.

12. Einrichtung nach einem der Ansprüche 9 bis 11,
wobei für eine anfängliche Iteration der anwendbare Metadatensatz ein Initialisierungs-Metadatensatz ist; und
wobei für jede nachfolgende Iteration der anwendbare Metadatensatz ein aktualisierter Metadatensatz ist, der in einer unmittelbar vorhergehenden Iteration erzeugt wurde.

13. Einrichtung nach einem der Ansprüche 9 bis 12, wobei das iterative Aktualisieren das Ausführen eines Optimierungsalgorithmus, der auf das Finden eines Minimums der Kostenfunktion ausgerichtet ist, mit dem elektronischen Prozessor umfasst und wobei optional der Optimierungsalgorithmus einen Partikelschwarm-Optimierungsalgorithmus oder einen Optimierungsalgorithmus vom Powell-Typ umfasst.

14. Einrichtung nach einem der Ansprüche 9 bis 13, wobei der mindestens eine Speicher und der Programmcode ferner dafür konfiguriert sind, mit dem mindestens einen Prozessor die Einrichtung dazu zu veranlassen, die Kostenfunktion unter Verwendung einer ΔE-ITP-Funktion, die auf ein Paar von Pixeln angewendet wird, zu berechnen, wobei ein Pixel des Paars aus dem zweiten Bild stammt und das andere Pixel des Paars aus dem dritten Bild stammt.

15. Einrichtung nach Anspruch 14, wobei der Wert der Kostenfunktion durch Finden eines Maximums der ΔE-ITP-Funktion über einem Pixelrahmen, der dem zweiten und dem dritten Bild entspricht, oder wobei der Wert der Kostenfunktion durch Berechnen eines Durchschnittswerts der ΔE-ITP-Funktion über einem Pixelrahmen, der dem zweiten und dem dritten Bild entspricht, bestimmt wird.

## Revendications

1. Procédé de traitement d'images pour l'estimation de métadonnées, le procédé comprenant :
l'accès, avec un processeur électronique, à une première image d'une scène et à une deuxième image de la scène, la première image présentant une première plage dynamique (DR), la deuxième image présentant une seconde DR inférieure à la première DR, dans lequel il n'y a pas de métadonnées associées à la deuxième image ;
la génération, avec le processeur électronique, d'une troisième image de la scène présentant la seconde DR en appliquant une fonction de mappage à la première image, la fonction de mappage étant configurée à l'aide d'un ensemble de métadonnées applicable ;
la génération, à l'aide du processeur électronique, d'une séquence d'ensembles de métadonnées mis à jour en mettant à jour de manière itérative l'ensemble de métadonnées applicable sur la base d'une fonction de coût quantifiant une différence entre la deuxième image et la troisième image ; et
le calcul, avec le processeur électronique, d'une valeur de la fonction de coût pour sélectionner un ensemble de métadonnées de sortie à partir de ladite séquence, l'ensemble de métadonnées de sortie présentant des métadonnées estimées pour la deuxième image.

2. Procédé selon la revendication 1,
dans lequel la première DR est une DR élevée ; et
dans lequel la seconde DR est une DR standard.

3. Procédé selon la revendication 1 ou la revendication 2, dans lequel l'ensemble de métadonnées de sortie inclut des métadonnées de niveau 1 et des métadonnées d'un autre niveau.

4. Procédé selon l'une quelconque des revendications 1 à 3,
dans lequel pour une itération initiale, l'ensemble de métadonnées applicable est un ensemble de métadonnées d'initialisation ; et
dans lequel pour toute itération ultérieure, l'ensemble de métadonnées applicable est un ensemble de métadonnées mis à jour généré dans une itération immédiatement précédente.

5. Procédé selon l'une quelconque des revendications 1 à 4, dans lequel ladite mise à jour itérative comprend l'exécution, avec le processeur électronique, d'un algorithme d'optimisation visant à trouver un minimum de la fonction de coût, et en option dans lequel l'algorithme d'optimisation comprend un algorithme d'optimisation par essaim de particules ou un algorithme d'optimisation de type Powell.

6. Procédé selon l'une quelconque des revendications 1 à 5, comprenant en outre le calcul, avec le processeur électronique, de la fonction de coût en utilisant une fonction ΔE ITP appliquée à une paire de pixels, un pixel de la paire provenant de la deuxième image et l'autre pixel de la paire provenant de la troisième image.

7. Procédé selon la revendication 6, dans lequel la valeur de la fonction de coût est déterminée en trouvant une valeur maximale de la fonction ΔE ITP sur une trame de pixels correspondant aux deuxième et troisième images ou en calculant une valeur moyenne de la fonction ΔE ITP sur une trame de pixels correspondant aux deuxième et troisième images.

8. Support non transitoire lisible par machine, sur lequel est encodé un code de programme, dans lequel lorsque le code de programme est exécuté par une machine, la machine effectue des opérations comprenant le procédé selon la revendication 1.

9. Appareil de traitement d'images pour l'estimation de métadonnées, l'appareil comprenant :
au moins un processeur ; et
au moins une mémoire incluant le code de programme ;
dans lequel la au moins une mémoire et le code de programme sont configurés, avec le au moins un processeur, pour amener l'appareil au moins à :
accéder à une première image d'une scène et à une deuxième image de la scène, la première image présentant une première plage dynamique (DR), la deuxième image présentant une seconde DR plus petite que la première DR, dans lequel il n'y a pas de métadonnées associées à la deuxième image ;
générer une troisième image de la scène présentant la seconde DR en appliquant une fonction de mappage à la première image, la fonction de mappage étant configurée à l'aide d'un ensemble de métadonnées applicable ;
générer une séquence d'ensembles de métadonnées mis à jour en mettant à jour itérativement l'ensemble de métadonnées applicable sur la base d'une fonction de coût quantifiant une différence entre la deuxième image et la troisième image ; et
calculer une valeur de la fonction de coût pour sélectionner un ensemble de métadonnées de sortie à partir de ladite séquence, l'ensemble de métadonnées de sortie présentant des métadonnées estimées pour la deuxième image.

10. Appareil selon la revendication 9,
dans lequel la première DR est une DR élevée ; et
dans lequel la seconde DR est une DR standard.

11. Appareil selon la revendication 9 ou la revendication 10, dans lequel l'ensemble de métadonnées de sortie comprend des métadonnées de niveau 1 et des métadonnées d'un autre niveau.

12. Appareil selon l'une quelconque des revendications 9 à 11,
dans lequel pour une itération initiale, l'ensemble de métadonnées applicable est un ensemble de métadonnées d'initialisation ; et
dans lequel pour toute itération ultérieure, l'ensemble de métadonnées applicable est un ensemble de métadonnées mis à jour généré dans une itération immédiatement précédente.

13. Appareil selon l'une quelconque des revendications 9 à 12, dans lequel ladite mise à jour itérative comprend l'exécution, avec le processeur, d'un algorithme d'optimisation visant à trouver un minimum de la fonction de coût, et éventuellement dans lequel l'algorithme d'optimisation comprend un algorithme d'optimisation par essaim de particules ou un algorithme d'optimisation de type Powell.

14. Appareil selon l'une quelconque des revendications 9 à 13, dans lequel la au moins une mémoire et le code de programme sont en outre configurés, avec le au moins un processeur, pour amener l'appareil à calculer la fonction de coût en utilisant une fonction ΔE ITP appliquée à une paire de pixels, un pixel de la paire provenant de la deuxième image et l'autre pixel de la paire provenant de la troisième image.

15. Appareil selon la revendication 14, dans lequel la valeur de la fonction de coût est déterminée en trouvant une valeur maximale de la fonction ΔE ITP sur une trame de pixels correspondant aux deuxième et troisième images ou dans lequel la valeur de la fonction de coût est déterminée en calculant une valeur moyenne de la fonction ΔE ITP sur une trame de pixels correspondant aux deuxième et troisième images.
